# EUROPÄISCHE PATENTANMELDUNG

(11) **EP 1 293 414 A2**
(43) Veröffentlichungstag der Anmeldung: **19.03.2003**
(21) Anmeldenummer: 02015414.2
(22) Anmeldetag: 11.07.2002
(51) Int. Cl.: B62D 15/02

(54) **Lenkwinkelmesseinrichtung**

(30) Priorität: 13.09.2001 DE 10145030
(71) Anmelder: Valeo Schalter und Sensoren GmbH, 74321 Bietigheim-Bissingen (DE)
(72) Erfinder: Grüner, Roland, 71732 Tamm (DE); Ruetz, Christian, 71636 Ludwigsburg (DE)
(74) Vertreter: Dreiss, Fuhlendorf, Steimle & Becker

(57) **Zusammenfassung**

Die Erfindung betrifft eine Lenkwinkelmesseinrichtung zur Bestimmung des Lenkwinkels eines Fahrzeuges, mit einem Gehäuse, wobei das Gehäuse wenigstens einen Gehäuseabschnitt (62) mit einem Durchbruch (64) aufweist, mit einer auf der einen Seite des Gehäuseabschnitts (62) angeordneten, um eine Drehachse (60) drehbar gelagerten Codescheibe (10) und mit einem auf der anderen Seite des Gehäuseabschnitts (62) angeordneten Lagerring (40), der im Bereich des Durchbruchs (64) mit der Codescheibe (10) über Verbindungsmittel drehfest verbunden ist.

Die Erfindung kennzeichnet sich dadurch, dass die codescheibenseitigen und/oder die lagerringseitigen Verbindungsmittel Rastnasen (24) und/oder Rastbuchten (46) umfassen, wobei die codescheibenseitigen mit den jeweils zugehörigen lagerringseitigen Verbindungsmitteln unter Vorspannung zusammenwirken.

## Beschreibung

Die Erfindung betrifft eine Lenkwinkelmesseinrichtung zur Bestimmung des Lenkwinkels eines Fahrzeuges, mit einem Gehäuse, wobei das Gehäuse wenigstens einen Gehäuseabschnitt mit einem Durchbruch aufweist, mit einer auf der einen Seite des Gehäuseabschnitts angeordneten, um eine Drehachse drehbar gelagerten Codescheibe und mit einem auf der anderen Seite des Gehäuseabschnitts angeordneten Lagerring, der im Bereich des Durchbruchs mit der Codescheibe über Verbindungsmittel drehfest verbunden ist.

Eine derartige Lenkwinkelmesseinrichtung ist beispielsweise aus der DE 199 33 047 A1 bekannt geworden. Der Lagerring weist Rasthaken auf, die im montierten Zustand der Lenkwinkelmesseinrichtung die Codescheibe hinterrasten. Zwischen der Codescheibe und dem Lagerring ist damit ein gewisses Spiel vorhanden. Dies führt zu Lageungenauigkeiten der Codescheibe und zu einer schlechten Übertragung von zwischen der Codescheibe und dem Lagerring wirkenden Kräften. Eine hohe Lagegenauigkeit ist allerdings dann erforderlich, wenn die Codescheibe von beispielsweise der Lenksäule über den Lagerring gedreht wird. Der vorliegenden Erfindung liegt deshalb die Aufgabe zugrunde, eine Lenkwinkelmesseinrichtung bereitzustellen, die eine Codescheibe aufweist, die eine sehr hohe Lagegenauigkeit sowohl in axialer als auch in radialer Richtung bezüglich der Drehachse hat. Die Lagegenauigkeit der Codescheibe ist insbesondere für die optische Auswertung des Lenkwinkels, der über einen an der Codescheibe vorhandenen optischen Code bestimmt wird, wichtig.

Die genannte Aufgabe wird durch eine Lenkwinkelmesseinrichtung der eingangs beschriebenen Art erfindungsgemäß dadurch gelöst, dass die codescheibenseitigen und/oder die lagerringseitigen Verbindungsmittel Rastnasen und/oder Rastbuchten umfassen, wobei die codescheibenseitigen mit den jeweils zugehörigen lagerringseitigen Verbindungsmittel unter Vorspannung zusammenwirken. Vorteilhafterweise wirkt die Vorspannung in axialer und in radialer Richtung, so dass ein Spiel zwischen Lagerring und Codescheibe weder in radialer, noch in axialer Richtung vorhanden ist. Neben dem Formschluss aufgrund der zusammenwirkenden Rastnasen und Rastbuchten bewirkt die Vorspannung zusätzlich einen Kraftschluss. Folglich wird eine Formstabilität zwischen Lagerring und Codescheibe erreicht.

Zur Realisierung einer geeigneten Vorspannung kann erfindungsgemäß vorgesehen sein, dass die codescheibenseitigen und/oder die lagerringseitigen Verbindungsmittel im Bereich von in radialer Richtung elastisch nachgiebigen Abschnitten angeordnet sind.

Dabei kann insbesondere vorgesehen sein, dass die elastisch nachgiebigen Abschnitte auf der der jeweiligen Rastnase und/oder Rastbucht abgewandten Seite eine Materialaussparung vorsehen. Aufgrund der Materialaussparung hinter den jeweiligen Rastnasen und/oder Rastbuchten kann der Materialabschnitt, der die Rastnase bzw. die Rastbucht aufweist, radial in Richtung der Materialaussparung elastisch verformt werden. Je nach Größe der Materialaussparung und je nach verwendetem Material ist eine entsprechend große Kraft zur elastischen Verformung der die Rastnase bzw. die Rastbucht aufweisenden Abschnitte erforderlich.

Vorteilhafterweise kann sich die Materialaussparung einer Rastbucht bis in die Rastbucht selbst erstrecken. Damit wird der von der Rastbucht und der von der Materialaussparung umgebene Abschnitt, der die Form eines Steges aufweist, zum einen in radialer Richtung, zum anderen auch in axialer Richtung elastisch nachgiebig ausgebildet. Die mit einer derartigen Rastbucht zusammenwirkende Rastnase wird folglich vorteilhafterweise sowohl mit einer axial wirkenden als auch mit einer radial wirkenden Vorspannkraft beaufschlagt.

Um die axiale Vorspannung zu realisieren, kann erfindungsgemäß vorgesehen sein, dass wenigstens eine gehäuseseitige und/oder lagerringseitige Rastnase und/oder Rastbucht wenigstens eine schräg zur Drehachse verlaufende Auflagefläche aufweist, die mit einer entsprechenden Auflagefläche der mit ihr zusammenwirkenden Rastbucht und/oder Rastnase zusammenwirkt. Aufgrund des Vorsehens einer Auflagefläche, die nicht parallel oder rechtwinklig zu der Drehachse verläuft, wird die radial wirkende Kraftkomponente der Vorspannung in eine in der Auflagefläche auftretende axial wirkende und radial wirkende Kraftkomponente aufgespalten. Insbesondere in Verbindung mit an den Lagerring bzw. an der Codescheibe vorhandenen senkrecht zur Drehachse verlaufenden Anschlagflächen kann eine definierte, axiale Position der Codescheibe gegenüber dem Lagerring sowohl unter axialer als auch radialer Vorspannung erreicht werden.

Vorteilhafterweise kann die Auflagefläche zu der Drehachse einen Winkel im Bereich von 30° bis 60° und vorzugsweise einen Wert von 45° aufweisen. Die genannten Werte gewährleisten eine vorteilhafte axiale Vorspannkraft.

Bei einer weiteren Ausführungsform der Erfindung kann vorgesehen sein, dass der Lagerring als Mitnehmer zur Rückstellung von im Bereich der Lenkwinkelmesseinrichtung angeordneten Blinkerschaltern ausgebildet ist. Aufgrund der Betätigung von Blinkerschaltern wirken auf den Lagerring verschieden große Drehmomente. Diese verschiedenen Drehmomente können aufgrund der erfindungsgemäßen Verbindungsmittel zwischen Codescheibe und Lagerring ohne negative Auswirkungen auf die Genauigkeit der Bestimmung des Lenkwinkels übertragen werden.

Vorteilhafterweise sind die Rastnasen und/oder Rastbuchten unmittelbar an einen radial innen gelegenen, sich in axiale Richtung erstreckenden Ringbund der Codescheibe angeformt. Durch die einstückige Ausbildung des Ringbundes mit den Rastnasen bzw. Rastbuchten kann die Codescheibe zum einen kostengünstig hergestellt werden und zum anderen kann eine erforderliche Elastizität erreicht werden, um die Vorspannung zu ermöglichen.

Vorteilhafterweise ist der Ringbund aus Kunststoff, wobei der den Code aufweisende Abschnitt der Codescheibe aus einem anderen Material, insbesondere auch aus Metall, sein kann. Vorteilhafterweise ist der Lagerring aus Kunststoff.

In einer weiteren vorteilhaften Ausgestaltung der Erfindung weist der Lagerring einen radial innen gelegenen, sich in axiale Richtung durch den Durchbruch erstreckenden Ringabschnitt auf, an dem die Rastnasen und/oder Rastbuchten angeordnet sind. Vorteilhafterweise erstreckt sich hierbei lediglich der Lagerring bzw. dessen Ringabschnitt durch den Durchbruch. Die Codescheibe wirkt zur Befestigung dann mit dem sich durch den Durchbruch erstreckenden Ringabschnitt zusammen.

Um eine positionsgenaue Lage der Codescheibe zu dem Lagerring zu erreichen, kann erfindungsgemäß vorgesehen sein, dass an der Codescheibe und an dem Lagerring Führungsmittel angeordnet sind. Insbesondere sind die Führungsmittel derart ausgebildet, dass ein Verrasten der Codescheibe mit dem Lagerring in lediglich einer dafür vorgesehenen Position möglich ist. Ein fehlerhaftes Fügen der Codescheibe mit dem Lagerring wird damit ausgeschlossen.

Die Führungsmittel sind hierbei vorteilhafterweise als sich in axialer Richtung erstreckende Führungsnuten und/oder Führungsstege ausgebildet.

Weitere Vorteile und vorteilhafte Ausgestaltungen der Erfindung sind der nachfolgenden Beschreibung zu entnehmen, in der die Erfindung anhand des in der Zeichnung dargestellten Ausführungsbeispiels näher beschrieben und erläutert ist.

In der Zeichnung zeigen:
- Fig. 1:: eine Codescheibe einer erfindungsgemäßen Lenkwinkelmesseinrichtung in perspektivischer Ansicht;
- Fig. 2:: einen Lagerring in Form eines Mitnehmers einer erfindungsgemäßen Lenkwinkelmesseinrichtung in perspektivischer Ansicht;
- Fig. 3:: einen Schnitt durch eine erfindungsgemäße Lenkwinkelmesseinrichtung, die die Codescheibe gemäß Fig. 1 und den Mitnehmer gemäß Fig. 2 aufweist; und
- Fig. 4:: einen Ausschnitt aus Fig. 3.

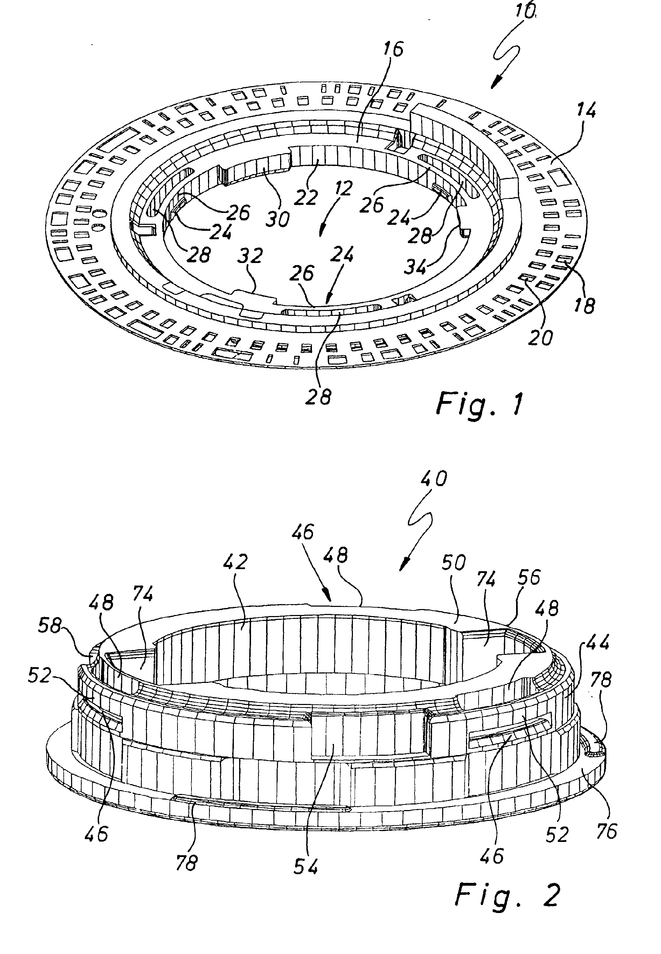

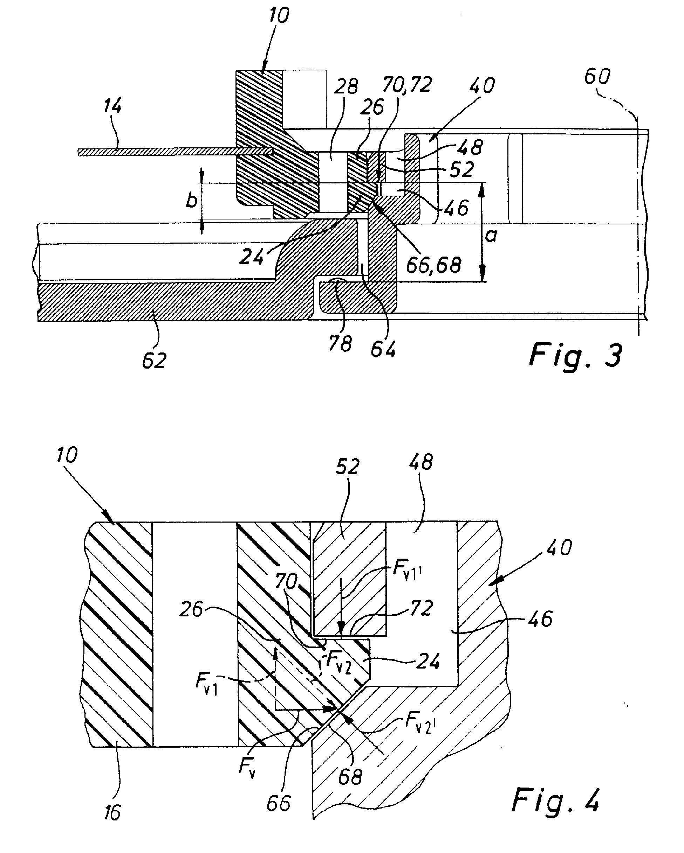

Die Fig. 1 zeigt eine coderingartige Codescheibe 10, mit einem zentralen Durchbruch 12. Wie auch aus Fig. 3 hervorgeht, umfasst die Codescheibe 10 einen ringscheibenförmigen Codeabschnitt 14 und einen radial innen liegenden Ringbund 16. Der Codeabschnitt 14 sieht zwei auf konzentrischen Bahnen liegende Codespuren 18 und 20 vor, die je einen Code in Form von verschieden großen Ausstanzungen aufweisen. Vorzugsweise ist der Codeabschnitt 14 aus einem metallischen Material und der Ringbund 16 aus Kunststoff.

Der Ringbund 16 weist an seiner radial innen liegenden, senkrecht zum Codeabschnitt 14 verlaufenden Innenwand 22 drei in einem Winkel von jeweils 120° zueinander angeordnete Rastnasen 24 auf. Die Rastnasen 24 sind jeweils auf einem radial elastisch nachgiebigen Rastnasenabschnitt 26 angeordnet. Die elastische Nachgiebigkeit der Abschnitte 26 wird durch eine auf der der jeweiligen Rastnase 24 abgewandten Seite des Abschnitts 26 vorhandene Materialaussparung 28 erreicht. Die Materialaussparungen 28 erstrecken sich über die gesamte Höhe des Ringbundes 16 in axialer Richtung. Die Abschnitte 26 sind demnach stegartig ausgebildet und in nach radial außen gewandter Richtung elastisch nachgiebig.

An der Innenwand 22 des Ringbundes 16 sind ferner in axialer Richtung verlaufende Führungsstege 30, 32 und 34 vorgesehen. Der Führungssteg 30 ist hierbei breiter ausgebildet als die beiden Führungsstege 32 und 34.

In der Fig. 2 ist ein Lagerring 40 dargestellt, der im montierten Zustand mit der Codescheibe 10 drehfest verbunden ist.

Der Lagerring 40 weist einen zentralen Durchbruch 42 auf. Der Außendurchmesser des Lagerrings 40 ist geringfügig kleiner als der als der Innendurchmesser der Codescheibe 10, so dass die Codescheibe 10 auf den Lagerring 40 aufgesetzt und mit diesem verrastet werden kann. Dazu sieht der Lagerring 40 an seiner außen liegenden Mantelfläche 44 drei im Abstand von jeweils ca. 120° angeordnete Rastbuchten 46 vor. Im montierten Zustand, wie er in Fig. 3 dargestellt ist, liegen die Rastnasen 24 in der jeweiligen, zugehörigen Rastbucht 46.

Im Bereich der Rastbuchten 46 weist Lagerring 40 Materialaussparungen 48 auf, die sich in axialer Richtung durch den Lagerring 40 bis hin zu den Rastbuchten 46 erstrecken. Dadurch wird zwischen den Rastbuchten 46 und den sich von den Rastbuchten 46 in Richtung der mit dem Bezugszeichen 50 gekennzeichneten Oberseite des Lagerrings 40 eine durchgängige Aussparung bzw. ein Durchbruch gebildet.
Es verbleibt ein in nach radial innen elastisch verformbarer Stegabschnitt 52.

Der Lagerring 40 sieht ferner sich von seiner Oberseite 50 axial erstreckende Führungsnuten 54, 56 und 58 vor, in die die Führungsstege 30, 32 und 34 axial einführbar sind. Dadurch, dass der etwas breiter ausgebildete Steg 30 ausschließlich in die ebenfalls etwas breiter Führungsnut 54 passt, kann ein axiales Aufschieben der Codescheibe 10 auf den Lagerring 40 nur in einer einzigen vorgegebenen Lage erfolgen.

Beim Montieren der Codescheibe 10 mit dem Lagerring 40 verformen sich vorteilhafterweise die Abschnitte 26 des Ringbundes 16 der Codescheibe in nach radial außen gewandter Richtung. Gleichzeitig verformen sich vorteilhafterweise die Stegabschnitte 52 des Lagerrings 40 in nach radial innen liegender Richtung, bis die Rastnasen 24 in die dafür vorgesehenen Rastbuchten 46 einrasten. Eine Drehsicherung des Lagerrings 40 gegenüber der Codescheibe 10 wird durch die in die Führungsnuten 54, 56 und 58 passgenau eingreifenden Führungsstege 30, 32 und 34 realisiert.

Der Lagerring 40 weist an seiner den Durchbruch 42 umgebenden Mantelfläche zwei in axialer Richtung verlaufende Aufnahmenuten 74 auf, die insbesondere zur drehsicheren Anbindung des Lagerrings 40 an eine Lenksäule bzw. ein Lenkrad eines Kraftfahrzeuges dienen.

Der Lagerring 40 weist ferner auf seiner der Oberseite 50 gegenüberliegenden Seite einen sich in radialer Richtung erstreckenden Ringflansch 76 auf. Auf der Oberseite des Ringflansches 76 sind in regelmäßigen Abständen zueinander Auflageabschnitte 78 angeformt. Im montierten Zustand, wie er in Fig. 3 dargestellt ist, wirken die Auflageabschnitte 78 gegen den ortsfest angeordneten Gehäuseabschnitt 62.

Im montierten Zustand, wie er in Fig. 3 dargestellt ist, ist die Codescheibe 10 über den mit ihr verrasteten Lagerring 40 drehbar um eine Drehachse 60 an einen Gehäuseabschnitt 62 eines Gehäuses einer Lenkwinkelmesseinrichtung angeordnet. Der Lagerring 40 durchgreift hierbei einen Durchbruch 64 des Gehäuseabschnitts 62.

In Fig. 3 ist deutlich zu erkennen, wie eine Rastnase 24 in die zugehörige Rastbucht 46 greift. Aufgrund der elastischen Verformbarkeit des Rastnasenabschnitts 26 in radialer Richtung drückt die Rastnase 24 in die Rastbucht 46. Die Rastnase 24 wirkt folglich mit der Rastbucht 46 unter Vorspannung zusammen.

In der Fig. 4 ist die Rastnase 24 und die Rastbucht 46 in vergrößertem Ausschnitt dargestellt. Die Vorspannkraft, mit der die Rastnase 24 in radialer Richtung in die Rastbucht 46 drückt, ist mit Fᵥ dargestellt. Deutlich zu erkennen ist, dass die Rastnase 24 eine von radial innen nach radial außen nach schräg unten verlaufende Auflagefläche 66 vorsieht. Die Auflage 66 wirkt mit einer lagerringseitigen Auflagefläche 68 zusammen, die eine entsprechende Schrägung aufweist. Auf der der Auflagefläche 66 abgewandten Seite weist die Rastnase 24 eine senkrecht zur Drehachse 60 angeordnete zweite Auflagefläche 70 auf. Diese Auflagefläche 70 liegt im montierten Zustand an einer entsprechend verlaufenden, lagerringseitigen Auflagefläche 72 an.

Die aufgrund der radialen Vorspannung wirkende Vorspannkraft Fᵥ wird an der schrägen Auflagefläche 66/68 in zwei Kraftkomponenten Fᵥ₁ und Fᵥ₂ aufgespalten. Fv₂ wirkt hierbei senkrecht zu den Auflageflächen 60 und 68. Die Kraft Fᵥ₂ wird von einer lagerringseitigen Gegenkraft F_{v2'} kompensiert. Die nach vertikal oben gerichtete Kraft Fᵥ₁ wird von einer Gegenkraft F_{v1'} kompensiert, die an der lagerringseitig senkrecht zur Drehachse 60 verlaufenden Auflagefläche 72 angreift.

Aus Fig. 4 wird deutlich, dass aufgrund der radialen Vorspannung der Rastnase 24 und den entsprechenden Auflageflächen 66, 68 und 70, 72 die Rastnase 24 gegen einerseits die Auflagefläche 68 und andererseits die Auflagefläche 72 gedrückt wird. Dabei werden die Codescheibe 10 und der Lagerring 40 durch die Verrastung auf einen definierten Abstand in axialer Richtung miteinander verbunden. Beispielhaft sind in Fig. 3 die vorgegebenen Abstände a und b eingezeichnet. Durch Belastungen im Betrieb des Lenkwinkelsensors werden diese Abstände nicht verändert. Die Codescheibe 10 und der Lagerring 40 sind damit formstabil und lagegenau miteinander verbunden.

Vorteilhafterweise sind die Auflageflächen zwischen der Codescheibe 10 einerseits und dem Lagerring 40 andererseits großflächig, wodurch eine gleichmäßige Kraftverteilung erfolgt.

Die Auflagefläche 66 bzw. 68 weist etwa einen Winkel von 40° gegenüber der Drehachse 60 auf. Vorteilhafte Werte ergeben sich in einem Winkelbereich zwischen 30° und 60°.

Der Mitnehmer und/oder die Codescheibe bzw. der Ringbund 16 der Codescheibe kann einen Mitnehmer aufweisen, der insbesondere mit Blinkerschaltern zusammenwirkt, die im Bereich der Lenkwinkelmesseinrichtung angeordnet sind.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Lenkwinkelmesseinrichtung zur Bestimmung des Lenkwinkels eines Fahrzeuges, mit einem Gehäuse, wobei das Gehäuse wenigstens einen Gehäuseabschnitt (62) mit einem Durchbruch (64) aufweist, mit einer auf der einen Seite des Gehäuseabschnitts (62) angeordneten, um eine Drehachse (60) drehbar gelagerten Codescheibe (10) und mit einem auf der anderen Seite des Gehäuseabschnitts (62) angeordneten Lagerring (40), der im Bereich des Durchbruchs (64) mit der Codescheibe (10) über Verbindungsmittel drehfest verbunden ist, **dadurch gekennzeichnet, dass** die codescheibenseitigen und/oder die lagerringseitigen Verbindungsmittel Rastnasen (24) und/oder Rastbuchten (46) umfassen, wobei die codescheibenseitigen mit den jeweils zugehörigen lagerringseitigen Verbindungsmitteln unter Vorspannung zusammenwirken.

2. Lenkwinkelmesseinrichtung nach Anspruch 1, **dadurch gekennzeichnet, dass** die codescheibenseitigen und/oder die lagerringseitigen Verbindungsmittel im Bereich von in radialer Richtung elastisch nachgiebigen Abschnitten (26, 52) angeordnet sind.

3. Lenkwinkelmesseinrichtung nach Anspruch 2, **dadurch gekennzeichnet, dass** die elastisch nachgiebigen Abschnitte (26, 52) auf der der jeweiligen Rastnase (24) und/oder Rastbucht (46) abgewandten Seite eine Materialaussparung (28, 48) vorsehen.

4. Lenkwinkelmesseinrichtung nach Anspruch 3, **dadurch gekennzeichnet, dass** sich die Materialaussparung (48) einer Rastbucht (46) bis in die Rastbucht (46) erstreckt.

5. Lenkwinkelmesseinrichtung nach Anspruch 1, 2 oder 3, **dadurch gekennzeichnet, dass** wenigstens eine gehäuseseitige und/oder lagerringseitige Rastnase (24) und/oder Rastbucht (46) wenigstens eine schräg zur Drehachse (60) verlaufende Auflagefläche (66, 68) aufweist, die mit einer entsprechenden Auflagefläche (68, 66) der mit ihr zusammenwirkenden Rastbucht (46) und/oder Rastnase (24) zusammenwirkt.

6. Lenkwinkelmesseinrichtung nach einem der vorhergehenden Ansprüche, **dadurch gekennzeichnet, dass** die Auflagefläche (66, 68) zu der Drehachse (60) einen Winkel im Bereich von 30° bis 60° und vorzugsweise 45° aufweist.

7. Lenkwinkelmesseinrichtung nach einem der vorhergehenden Ansprüche, **dadurch gekennzeichnet, dass** der Lagerring (40) als Mitnehmer zur Rückstellung von im Bereich der Lenkwinkelmesseinrichtung angeordneten Blinkerschaltern ausgebildet ist.

8. Lenkwinkelmesseinrichtung nach einem der vorhergehenden Ansprüche, **dadurch gekennzeichnet, dass** der Lagerring (40) Mittel (74) zur drehfesten Anbindung an eine Lenksäule und/oder an ein Lenkrad aufweist.

9. Lenkwinkelmesseinrichtung nach einem der vorhergehenden Ansprüche, **dadurch gekennzeichnet, dass** die Rastnasen (24) und/oder Rastbuchten (46) unmittelbar an einen radial innen gelegenen, sich in axiale Richtung erstreckenden Ringbund (16) der Codescheibe (10) angeformt sind.

10. Lenkwinkelmesseinrichtung nach Anspruch 9, **dadurch gekennzeichnet, dass** der Ringbund (16) aus Kunststoff ist.

11. Lenkwinkelmesseinrichtung nach einem der vorhergehenden Ansprüche, **dadurch gekennzeichnet, dass** der Lagerring (40) aus Kunststoff ist.

12. Lenkwinkelmesseinrichtung nach einem der vorhergehenden Ansprüche, **dadurch gekennzeichnet, dass** der Lagerring (40) einen radial innen gelegenen, sich in axiale Richtung durch den Durchbruch (64) erstreckenden Ringabschnitt aufweist, an dem die Rastnasen und/oder Rastbuchten (46) angeordnet sind.

13. Lenkwinkelmesseinrichtung nach einem der vorhergehenden Ansprüche, **dadurch gekennzeichnet, dass** an der Codescheibe (10) und an dem Lagerring (40) Führungsmittel (30, 32, 34, 54, 56, 58) angeordnet sind, mit denen eine positionsgenaue Lage der Codescheibe (10) zu dem Lagerring (40) erreicht wird.

14. Lenkwinkelmesseinrichtung nach Anspruch 13, **dadurch gekennzeichnet, dass** die Führungsmittel als sich in axialer Richtung erstreckende Führungsnuten (54, 56, 58) und/oder Führungsstege (30, 32, 34) ausgebildet sind.
